# EUROPEAN PATENT SPECIFICATION

(11) **EP 2 441 709 B1**
(45) Date of publication and mention of the grant of the patent: **29.01.2014**
(21) Application number: 10187669.6
(22) Date of filing: 15.10.2010
(51) Int. Cl.: B65G 47/90, B65G 47/91, B65G 61/00

(54) **Gripper for picking palletized goods**
Greifer zum Greifen von Palettengütern
Préhenseur pour ramasser des marchandises pallétisées

(43) Date of publication of application: 18.04.2012
(73) Proprietor: Prospect AB, 291 23 Kristianstad (SE)
(72) Inventor: Hennig, Ralf, 291 95, Förlöv (SE)
(74) Representative: Larsson, Malin

(56) References cited:
- DE-A1- 4 427 488
- DE-A1- 19 834 927
- DE-U1-202005 007 347
- US-B1- 6 412 844

## Description

### Field of the Invention

The invention relates to a gripper for picking palletized box-shaped goods, such as plastic boxes, banana cartons and/or card board boxes, and moving said goods between different positions, comprising at least one fixation device for positioning the gripper towards a back end surface of the goods.

### Background of the Invention

Order picking, which is often called mix palletizing, is one of many palletizing methods. Order picking is used in distribution centres and warehouses for example where different product types, which may vary in dimensions and content, are manually picked and putted on a same pallet according to a customer order. The products are picked on full stock-keeping unit pallets or from racks or shelves.

A gripper for picking the products is previously known by US 2007/0280812 and comprises a vacuum jaw assembly with transversally moveably suction pads and longitudinally moveable friction pads to be located against two sides of the product. However, this gripper is not suitable to handle different box-shaped goods, such as plastic boxes having perforations or banana cartons having an external lid.

Automated or robotized mix palletizing systems and methods are known in the art. US 2008/0267759 discloses one order picking system comprising stations for receiving stock-keeping unit pallets or supplier pallets with layers of identical products, a mixed pallet or customer pallet receiver and a robot and pallet support shuttle for receiving an empty pallet, carrying the empty pallet adjacent a selected one of the stock-keeping unit pallet stations, repeatedly charging at least one of the selected products from the stock-keeping unit pallet stations on the empty pallet, until a mixed pallet is completed according to an order and unloading the mixed pallet onto the mixed pallet receiver to be picked up.

The previously known combined pallet support and robot shuttle comprises a robot and a pallet, both being mounted on a same shuttle for movement. The robot picks the products from full stock-keeping unit pallets, located along the path of the shuttle, and places the products on the mixed pallet.

DE 44 27 488 discloses an example of a robot for picking up boxes having a gripper according to the preamble of claim 1. The robot has suction means arranged to engage a rear, vertical wall of a box. Further, a lower bottom surface is provided, forming a support for the bottom surface of the box.

DE 198 34 927 discloses another example of a gripper. The gripper is located in a stocking system and comprises a suction element which may be fixated at a rear wall of a box. The gripper is arranged to pull out the box from a shelf for placing on a platform.

The prior art also including a conveyor system consisting of chain conveyors and roller conveyors to handle a pallet between different robot cells and an unloading position for a mixed pallet.

The mixed pallet or customer pallets will contain different types of stock-keeping units. For instance, in fruit and vegetable handling the mix of stock-keeping units will be according to the shop order and the actual balancing of the system. The stock-keeping units will be placed on the customer pallets in the following order, first plastic boxes, secondly, so called, banana cartons and finally other boxes. Such order is depending of the stability of the different type of boxes.

### Summary of the Invention

It is an object of the present invention to provide a safe and secure loading of mixed pallets. In accordance with the present invention there is provided a gripper for picking palletized box-shaped goods, such as plastic boxes, banana cartons and/or card board boxes as defined in claim 1. Hereby, goods of different kinds may be picked by one gripper and securely fixated during movement.

Preferably, the hook is moveably towards the goods in a horizontal direction and in a vertically direction to hook on and unhook the goods, for securely fixation of the goods. The support plate may be moveable in horizontal direction beneath the goods, for supporting the base surface of the goods, or towards the side surface of the goods, for supporting said surface.

The invention also includes the use of the gripper of claim 1.

### Brief Description of the Drawings

This and other aspects of the present invention will now be described in more detail, with reference to the appended drawings showing a currently preferred embodiment of the invention.
Figure 1 shows a schematic view in perspective of a gripper according to the present invention in a first loading position,
Figure 2 shows a schematic view in perspective of a gripper according to the present invention in a second loading position,
Figure 3 shows a schematic view in perspective of a gripper according to figure 1 having two plastic boxes loaded, and
Figure 4 shows a schematic view in perspective of a gripper according to figure 2 having two banana cartons loaded.

### Detailed Description

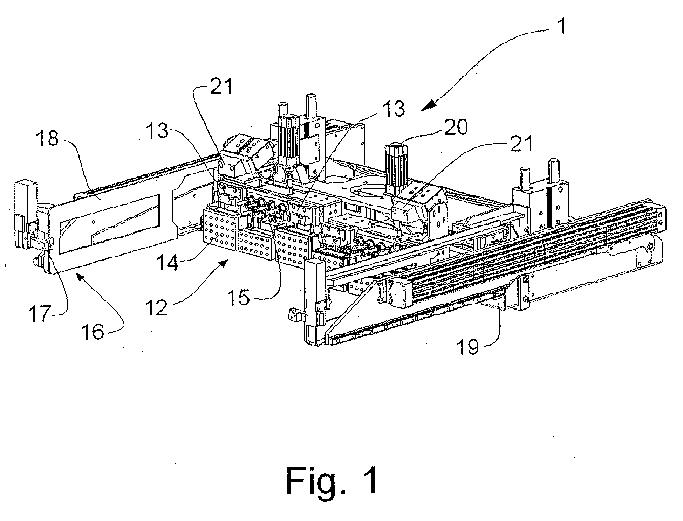

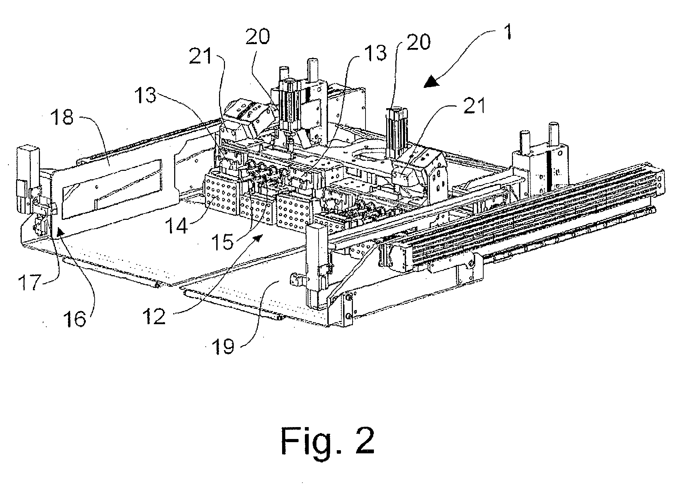

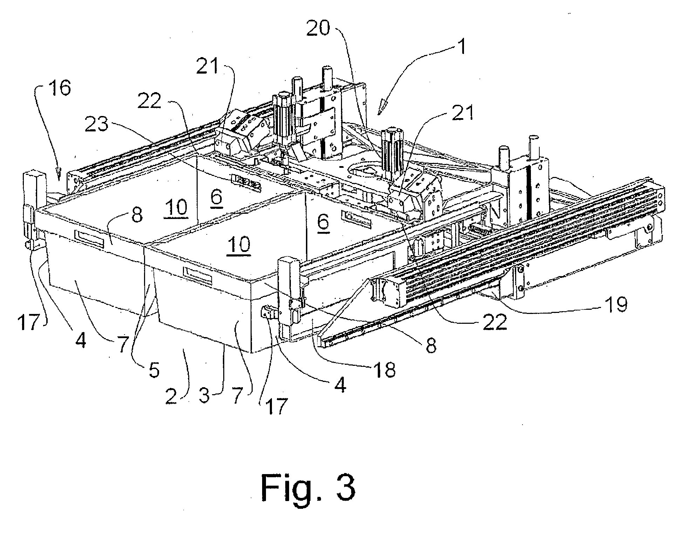

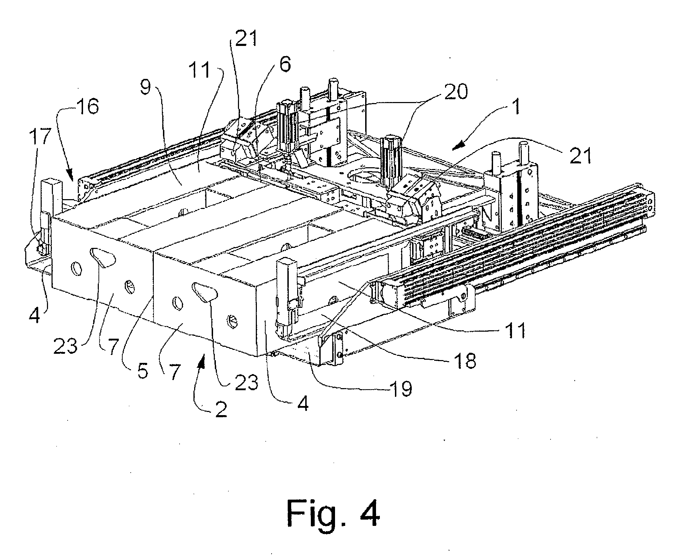

Figure 1 to 4 discloses a gripper 1 for picking palletized box-shaped goods 2 on a pallet (not shown) and moving said goods 2 between different positions. The box-shaped goods 2 within a desired specification having a base surface 3, two side surfaces 4 and 5 and two end surfaces 6 and 7, the side surfaces 4 and 5 and end surfaces 6 and 7 may have an upper gripping edge 8. The box-shaped goods 2 may also be provided with an upper lid 9. Thus, the gripper 1 is designed to handle plastic boxes 10, banana cartons 11, card board boxes and other boxes (not shown) or empty pallets (not shown). The gripper 1 comprising at least one fixation device 12, such as a hook 13, a suction block 14, a load-bearing pin 15 or a combination thereof, for positioning the gripper 1 towards a back end 6 of the goods 2. The gripper 1 having at least one additional device 16, such as a hook 17 or a support plate 18 or 19, to fixate at least one side surface 4 of the goods 2 perpendicular to said back end 6 of the goods 2.

Preferable, the hook 13 and/or 17 is moveably towards the goods 2 in a horizontal direction and in a vertically direction to hook on and unhook the goods 2.

The support plate 18 and 19 is moveable in horizontal direction and may be pushed beneath the goods 2 to support the base surface 3 or towards the side surface 4 of the goods 2. The plastic boxes 10 are picked up and carried by the hooks 13 in the back end surface 6 of the goods 2 and one hook 17 in the side surface 4 of the goods 2. The banana cartons 11, card board boxes and other boxes are picked up by vacuum of at least one suction block 14 and carried by the support plate 19, made of sheet metals or plastic. All moveable part are driven by compressed-air cylinders 20 or similar equipment.

In the initial phase before any process is started the support plate 18 and 19 are withdrawn. All the cylinders 20 are in there starting position.

The first step for picking plastic boxes 10 is that the gripper 1 positions itself towards the plastic boxes 10. In the second step the support plate 18 at the side surface 4 moves toward the goods 2 and the hook 17, which is located at the outer end of the support plate 18, is raised vertically upwards to hook up with the gripping edge 8. The hooks 13 located at the interior of the gripper 1 being pushed out towards the back end surface 6 of the goods 2. Finally, a support cylinder 21, located above at least one of the hooks 13, moves down and push on the corner 22 of the goods 2 to make sure that it does not tilt. Thus, the plastic box 10 gets picked up. The gripper 1 is designed to be able to pick up two plastic boxes at the same time.

The first step for banana cartons 11 is that the gripper 1 pushes against the banana cartons 11 so that a vacuum can be build up by the suction blocks 14. Between the vacuum blocks 14 there are spring loaded bearing pins 15, which are provided to extend into existing holes 23 in the banana cartons 11 to be able to lift both the lid 9 and the bottom (not shown) of the banana cartons 11 together, instead of just lifting the lid 9 by the vacuum blocks 14 of the gripper 1. In the second step the banana cartons 11 are lifted vertically, so that the support plate 19 can easily be inserted under the banana cartons 11 and in the third step the support plate 19 being pushed beneath the banana cartons 11. In the fourth step the support plate 18 is moved towards the side surface 4 to stabilize and clamp the cartons 11, hereafter the cartons are ready to be moved. Two cartons are picked up in the same way and the procedure for card board boxes or other boxes are the same as for banana cartons 11 except that the spring loaded bearing pins 15 are not necessary and will be pushed into the gripper 1, since there is no holes or any external lid on the card board boxes or the other boxes.

Empty pallets are picked up by the gripper 1. This may be done with clamps (not shown) on cylinders (not shown), arranged underneath the gripper 1, which grabs the pallet on each side.

## Claims

1. A gripper (1) for picking palletized box-shaped goods (2), such as plastic boxes (10), banana cartons (11) and/or card board boxes, and moving said goods (2) between different positions, **characterised in that** the gripper comprises
a fixation device (12), being a combination of a hook (13), a suction block (14) and a load-bearing pin (15), for positioning the gripper (1) towards a back end surface (6) of the goods (2), and
additional devices (16), being a hook (17) and at least one support plate (18, 19), to fixate at least one side surface (3, 4) of the goods (2) perpendicular to said back end surface (6) of the goods (2).

2. A gripper (1) according to claim 1, **characterised in that** the hook (13, 17) is moveably towards the goods (2) in a horizontal direction and in a vertically direction to hook on and unhook the goods (2).

3. A gripper (1) according to claim 1 or 2, **characterised in that** the at least one support plate (18, 19) is moveable in horizontal direction.

4. A gripper (1) according to claim 3, **characterised in that** the support plate (19) is moveable beneath the goods (2).

5. A gripper (1) according to claim 3, **characterised in that** the support plate (18) is moveably towards the side (7) of the goods (2).

6. Use of a gripper (1) according to claim 1 for picking palletized box-shaped goods (2), such as plastic boxes (10), banana cartons (11) and/or card board boxes, and for moving said goods (2) between different positions.

## Patentansprüche

1. Greifer (1) zum Greifen von kistenförmigen Palettengütern (2) wie Kunststoffkisten (10), Bananenkisten (11) und/oder Kartons, und zum Bewegen dieser Güter (2) zwischen unterschiedlichen Positionen, **dadurch gekennzeichnet, dass** der Greifer Folgendes umfasst:
eine Befestigungsvorrichtung (12), die eine Kombination aus einem Haken (13), einem Ansaugblock (14) und einem lasttragenden Stift (15) ist, um den Greifer (1) in Richtung einer hinteren Endoberfläche (6) der Güter (2) anzuordnen, und
zusätzliche Vorrichtungen (16), die ein Haken (17) und mindestens eine Stützplatte (18, 19) sind, um mindestens eine Seitenoberfläche (3, 4) der Güter (2) senkrecht zu der hinteren Endoberfläche (6) der Güter (2) zu befestigen.

2. Greifer (1) nach Anspruch 1, **dadurch gekennzeichnet, dass** der Haken (13, 17) zu den Gütern (2) in einer horizontalen Richtung und in einer vertikalen Richtung beweglich ist, um die Güter (2) ein- und auszuhaken.

3. Greifer (1) nach Anspruch 1 oder 2, **dadurch gekennzeichnet, dass** die mindestens eine Stützplatte (18, 19) in horizontaler Richtung beweglich ist.

4. Greifer (1) nach Anspruch 3, **dadurch gekennzeichnet, dass** die Stützplatte (19) unter den Gütern (2) beweglich ist.

5. Greifer (1) nach Anspruch 3, **dadurch gekennzeichnet, dass** die Stützplatte (18) zu der Seite (7) der Güter (2) beweglich ist.

6. Verwendung eines Greifers (1) nach Anspruch 1 zum Greifen von kistenförmigen Palettengütern (2) wie Kunststoffkisten (10), Bananenkisten (11) und/oder Kartons, und zum Bewegen dieser Güter (2) zwischen unterschiedlichen Positionen.

## Revendications

1. Préhenseur (1) pour ramasser des marchandises (2) palettisées en forme de boîtes, telles que des boîtes en plastique (10), des caisses de bananes (11) et/ou des boîtes en carton, et déplacer lesdites marchandises (2) entre différentes positions, **caractérisé en ce que** le préhenseur comprend
un dispositif de fixation (12), à savoir une combinaison d'un crochet (13), d'un bloc d'aspiration (14) et d'une goupille porteuse (15), pour positionner le préhenseur (1) en direction d'une surface d'extrémité arrière (6) des marchandises (2) et
des dispositifs supplémentaires (16), à savoir un crochet (17) et au moins une plaque de support (18, 19), pour fixer au moins une surface latérale (3, 4) des marchandises (2) perpendiculairement à ladite surface d'extrémité arrière (6) des marchandises (2).

2. Préhenseur (1) selon la revendication 1, **caractérisé en ce que** le crochet (13, 17) peut être déplacé en direction des marchandises (2) dans une direction horizontale et dans une direction verticale pour s'accrocher aux marchandises (2) et se décrocher de celles-ci.

3. Préhenseur (1) selon la revendication 1 ou 2, **caractérisé en ce que** l'au moins une plaque de support (18, 19) peut être déplacée dans une direction horizontale.

4. Préhenseur (1) selon la revendication 3, **caractérisé en ce que** la plaque de support (19) peut être déplacée en dessous des marchandises (2).

5. Préhenseur (1) selon la revendication 3, **caractérisé en ce que** la plaque de support (18) peut être déplacée en direction du côté (7) des marchandises (2).

6. Utilisation d'un préhenseur (1) selon la revendication 1 pour ramasser des marchandises (2) palettisées en forme de boîtes, telles que des boîtes en plastique (10), des caisses de bananes (11) et/ou des boîtes en carton, et pour déplacer lesdites marchandises (2) entre différentes positions.
